# EUROPÄISCHE PATENTSCHRIFT

(11) **EP 1 107 818 B1**
(45) Veröffentlichungstag und Bekanntmachung des Hinweises auf die Patenterteilung: **05.02.2003**
(21) Anmeldenummer: 99928986.1
(22) Anmeldetag: 16.07.1999
(51) Int. Cl.: B01D 29/11

(54) **BEFESTIGUNG VON KERZENFILTERELEMENTEN IN EINEM DRUCKBEHÄLTER**
FIXING DEVICE FOR CANDLE FILTER ELEMENTS IN A PRESSURE VESSEL
DISPOSITIF DE FIXATION D'ELEMENTS DE FILTRE A BOUGIE DANS UN RESERVOIR SOUS PRESSION

(30) Priorität: 25.07.1998 CH 157298
(43) Veröffentlichungstag der Anmeldung: 20.06.2001
(73) Patentinhaber: DRM, DR. MÜLLER AG, CH-8708 Männedorf ZH (CH)
(72) Erfinder: SCHUMACHER, Ivo, CH-8645 Jona (CH)
(86) Internationale Anmeldenummer: CH9900326
(87) Internationale Veröffentlichungsnummer: WO00006281

(56) Entgegenhaltungen:
- EP-A- 0 249 395
- CH-A- 660 850
- DE-A- 4 130 593
- FR-A- 2 127 360
- US-A- 3 934 906

## Beschreibung

Die Erfindung betrifft eine Befestigung von Kerzenfilterelementen, die an einem Sammelrohr in einem Druckbehälter zur aseptischen und/oder sterilen Filtration in einem Druckbehälter hängend angeordnet sind, bestehend aus einer Kupplung mit einem oberen konischen Kupplungsteil, einem unteren konischen Kupplungsteil und einem Nockenpaar sowie einem Tauchzohr.

Aus der WO 94/23819 ist ein Kerzenfilterelement der Art bekannt, welches zur Sterilfiltration in einem Druckbehälter geeignet ist. Zur Reinigung der Fitterelemente kann das als Stützkörper dienende Zentralrohr herausgenommen werden, ohne dass der Filterbehälter geöffnet werden muss. Die verwendeten Kupplungen sind stationär nur innen sterilisierbar und ohne Demontage nicht zu ausreichend zu reinigen.

Zur Befestigung von Kerzenfilterelementen wurden neben Verschraubungen auch Schnellverschlüsse verwendet. So beschreibt die CH-A-660 850 einen solchen Schnellverschluss der bei der Filtration von radioaktiven Abwässern geeignet ist und ein einfaches Auswechseln der Filterelemente durch einen Drehverschluss gewährleistet. Ein solcher Verschluss ist jedoch für aseptischen oder sterilen Gebrauch nicht geeignet.

Aulgabe der Erfindung ist es eine Vorrichtung zum Verbinden von druckbeaufschlagten Filterelementen in einem Druckbehälter zur Verfügung zu stellen, der für den aseptischen oder sterilen Gebrauch geeignet ist.

Diese Aufgabe wird erfindungsgemäss nach dem Kennzeichen von Anspruch 1, gelöst.

Der wesentliche Vorteil ist darin zu sehen, dass der eine Kupplungsteil mit Spülöffnungen so versehen ist, dass die Hohlräume zwischen den gegenüberliegenden Innenflächen der zwei Kupplungsteile mit CIP-Flüssigkeit gespült und / oder mit Dampf sterilisiert werden können.

Die Verbindung der Kupplungsteile erfolgt in vorteilhafter Weise durch gegenseitiges Verdrehen, so dass Verschlussnocken und Verschlussgegennocken ineinander greifen und durch eine Steigung auf Verschlussnocken oder Verschlussgegennocken, die Dichtflächen aufeinander gepresst werden.

Als Verbindung für Elemente mit vertikaler Achse sind beide Kupplungsteile konisch ausgebildet, um das Ablaufen von Flüssigkeit aus den Zwischenräumen zu ermöglichen. Durch die Konizität liegen die Dichtflächen nahe am Rohrdurchmesser. Sie weisen einen möglichst kleinen Querschnitt auf, der für die Verbindung benötigte Querschnitt Spülöffnungen vorgesehen ist und abgesehen von den Auflagepunkten der Nocken keine direkt aufeinander liegenden Flächen aufweist Die Verbindung benötigt mindesten zwei Nocken-Paare, vorzugsweise aber drei.

Als Kupplung für Filterelemente ist es von Vorteil wenn die Verbindungsnocken auf einem grossen Durchmesser liegen und dadurch der Hebelarm zur Aufnahme von radial auf die Filterelemente wirkender Kräfte möglichst gross ist Dabei kann die obere oder untere Nocke grösser sein.

Die Nocke kann am unteren Kupplungsteil und/oder am oberen Kupplungsteil axial angepresst sein. Die Steigung muss so gewählt werden, dass eine axiale Anpressung der Dichtung bewirkt wird.

In einer Variante kann die Dichtung auch radial dichtend angeordnet werden, so dass keine der Nocken eine Steigung aufweisen muss.

Es ist zweckmässig, das Tauchrohr fixiert anzuordnen, das bedeutet, dass das Tauchrohr nicht frei drehbar ist

Die Erfindung soll anhand einer Zeichnung näher beschrieben werden. Es zeigen:
Fig. 1die Gesamtansicht mit schematisch angedeutetem Filtergehäuse, mit einem an ein Sammelrohr angeschlossenem Filterelement.
Fig. 2 Grundriss des oberen Kupplungsteils
Fig. 3 Grundriss des unteren Kupplungsteils
Fig. 4 Gesamt-Seiten-Riss mit Filterelement, unterem Kupplungsteils, oberem Kupplungsteil, Filtratablaufrohr und Dichtung
Fig. 5 Gesamt-Seiten-Riss des unteren Kupplungsteils, mit Verschlussnocken
Fig. 6 Verbindungsprinzip als Kupplung für nicht frei drehbare Teile
Fig. 7 Verbindungsprinzip als Radial dichtende Kupplung ohne Steigung auf den Nocken

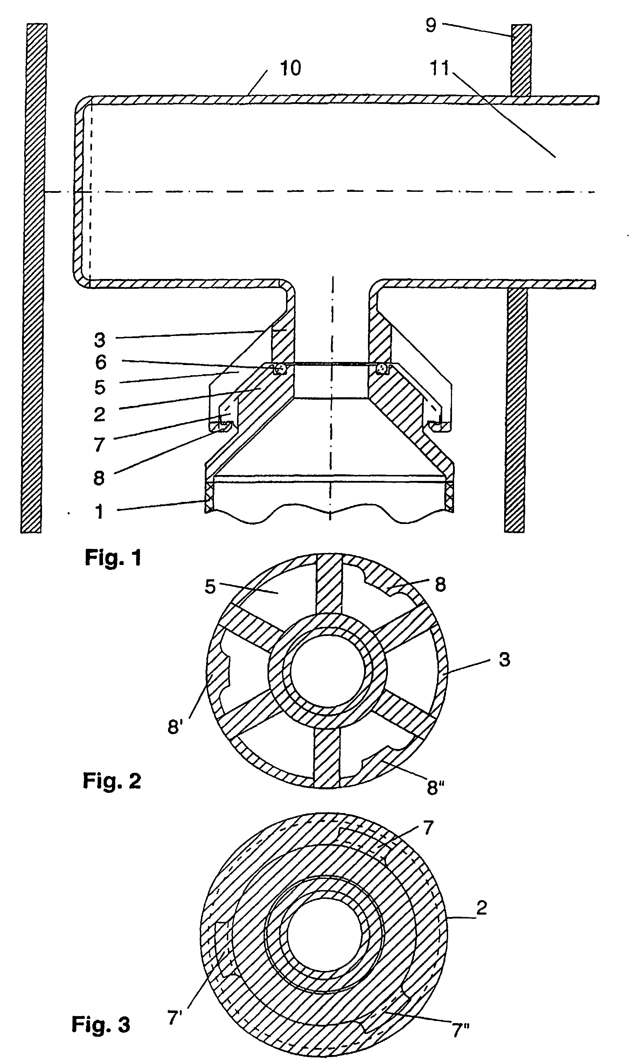

In Fig. 1 ist mit dem Bezugszeichen 1 ein Filterelement bezeichnet. Das Fitterelement 1 ist an einem unteren Kupplungsteil 2 in bekannter Weise befestigt. Das untere Kupplungsteil 2 und ein oberes Kupplungsteil 3 bilden eine Hohlraum, welcher als Tauchrohr 4 bezeichnet ist. Zwischen dem Kupplungsteil 2 und dem Kupplungsteil 3 ist eine Aussparung als Spülraum 5 ausgebildet. Der Kupplungsteil 2 ist mit dem Kupplungsteil 3 über eine Ringdichtung 6 verbunden. Verschlussnocken 7,7',7" sind am Kupplungsteil 2 und Verschlussnocken 8,8',8" sind am Kupplungsteil 3 vorgesehen. Das Tauchrohr 4 mündet in ein an einem Druckbehälter 9 befestigtem Sammelrohr 10 mit einem Filtratabfluss 11.

In Fig. 2 ist im Grundriss des unteren Kupplungsteils 2 dargestellt mit den Verschlussnocken 8, 8', 8" und der Spülöffnung 5.

In Fig. 3 ist im Grundriss der untere Kupplungsteils 2 dargestellt mit den Verschlussnocken 7, 7', 7".

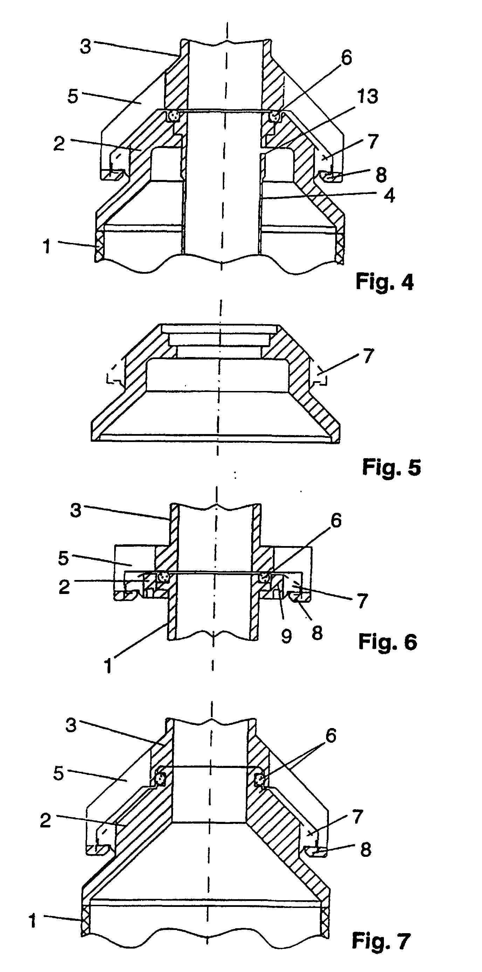

Fig. 4 zeigt eine Variante der erfindungsgemässen Befestigung mit einem in das Filterelement 1 führendem verlängertem Tauchrohr 4. Das Tauchrohr ist mit einer Entlüftungsbohrung 13 versehen.

Fig. 5 zeigt den Grundriss des unteren Kupplungsteils 2 mit der Verschlussnocke 7.

Fig. 6 zeigt eine weitere Variante der erfindungsgemässen Befestigung für nicht frei drehbare Teile

Fig. 7 zeigt eine weitere Variante der erfindungsgemässen Befestigung ohne Steigung auf den Nocken.

Als Kupplung für Filterelemente ist es von Vorteil wenn die Verbindungsnocken auf einem grossen Durchmesser liegen und dadurch der Hebelarm zur Aufnahme von radial auf die Filterelemente wirkender Kräfte möglichst gross ist.

Für die Abdichtung gibt es zwei mögliche Varianten:
A) Axial, mit für Keilwirkung ausgebildeten Nocken
B) Radial, mit Nocken nur als Verbindung der Teile

Die Variante "A" hat gegenüber "B" den Vorteil dass die Oberfläche im Dichtungbereich kleiner gehalten werden kann und sich kein Labyrint bildet welches für CIP-Flüssigkeiten einen Totraum darstellt.

## Patentansprüche

1. Befestigung von Kerzenfilterelementen(1), die an einem Sammelrohr (10), in einem Druckbehälter (9) zur aseptischen und/oder steriten Filtration von Flüssigkeiten hängend angeordnet sind, bestehend aus einer Kupplung mit einem oberen konischen Kupplungsteil (3), einem unteren konischen Kupplungsteil (2) und einem Nockenpaar (7,8) sowie einem Tauchrohr (4), **dadurch gekennzeichnet, dass** im oberen konischen Kupplungsteil (3) eine Spütöffnung (5) und wenigstens zwei Nockenpaare (7,8) und (7',8') vorgesehen sind.

2. Befestigung nach den Anspruch 1, **dadurch gekennzeichnet, dass** die Nocke (7) am unteren Kupplungsteil (2) und/oder am oberen Kupplungsteil (3) axial aufeinander gepresst ist.

3. Befestigung nach den Ansprüchen 1 und 2, **dadurch gekennzeichnet, dass** die Nocke (7) am unteren Kupplungsteil (2) und/oder am oberen Kupplungsteil (3) radial angepresst ist

## Claims

1. Fastening candle filter elements (1) which are fixed in a hanging position to a collector tube (10) in a pressure tank (9) for aseptic and/or sterile filtration of fluids, which is comprised of coupling with a conical upper coupling part (3), a conical lower part (2), and a pair of cams (7, 8) and a dip tube (4), **characterized in that** the conical upper coupling part (3), a rising opening (5) and at least two pairs of cams (7,8) and (7', 8') are provided.

2. Fastening according to claim 1, **characterized in that** the cam (7) is pressed axially against the lower coupling part (2) and/or is pressed axially against the upper coupling part (3).

3. Fastening according to claims 1 and 2, **characterized in that** the cam (7) is pressed radially against the lower coupling part (2) a and/or is pressed radially against the upper coupling part (3).

## Revendications

1. Fixation d'éléments filtrants en forme de bougies (1) qui sont suspendus à un tube collecteur (10), dans un récipient sous pression (9), en vue d'une filtration aseptique et/ou stérile de liquides, formée d'un accouplement comprenant un élément d'accouplement conique supérieur (3), un élément d'accouplement conique inférieur (2), une paire de saillies (7, 8) et un tube plongeur (4), **caractérisée en ce qu'**il est prévu dans l'élément d'accouplement conique supérieur (3) une ouverture de rinçage (5) et au moins deux paires de saillies (7, 8) et (7', 8').

2. Fixation selon la revendication 1, **caractérisée en ce que** la saillie (7) de l'élément d'accouplement inférieur (2) et/ou de l'élément d'accouplement supérieur (3) est pressée axialement.

3. Fixation selon les revendications 1 et 2, **caractérisée en ce que** la saillie (7) de l'élément d'accouplement inférieur (2) et/ou de l'élément d'accouplement supérieur (3) est pressée radialement.
